# EUROPÄISCHE PATENTSCHRIFT

(11) **EP 2 059 422 B1**
(45) Veröffentlichungstag und Bekanntmachung des Hinweises auf die Patenterteilung: **23.06.2010**
(21) Anmeldenummer: 07787424.6
(22) Anmeldetag: 12.07.2007
(51) Int. Cl.: B60S 1/04

(54) **SCHEIBENWISCHERANLAGE**
WINDSHIELD WIPER SYSTEM
SYSTÈME D'ESSUIE-GLACE

(30) Priorität: 31.08.2006 DE 102006040735
(43) Veröffentlichungstag der Anmeldung: 20.05.2009
(73) Patentinhaber: Robert Bosch GmbH, 70442 Stuttgart (DE)
(72) Erfinder: HAWIGHORST, Achim, 77830 Buehlertal (DE)
(86) Internationale Anmeldenummer: PCT/EP2007/057153
(87) Internationale Veröffentlichungsnummer: WO 2008/025606

(56) Entgegenhaltungen:
- EP-A- 1 481 858
- WO-A-03/097419

## Beschreibung

Die Erfindung betrifft eine Scheibenwischeranlage für Fahrzeuge, insbesondere Kraftfahrzeuge mit einer Karosserie, mit den Merkmalen des Oberbegriffs von Anspruch 1.

### Stand der Technik

Anforderungen, die an Wischeranlagen gestellt werden, bestimmen sich zunächst nach funktionalen Betriebsparametern. Dazu zählen die Größe und Geometrie der zu reinigenden Fläche, zu erwartende Windlasten, die erforderliche Wischerfrequenz und damit verbundene mechanische Parameter, also Kräfte und Momente. Um diese Kräfte und Momente sicher aufnehmen zu können, ist es üblich, Wischeranlagen an mehreren Befestigungspunkten mit einer entsprechenden Tragstruktur zu verbinden. Um die Einkopplung von Betriebsgeräuschen in das Innere des Fahrzeuges zu unterdrücken, werden diese Befestigungspunkte in der Regel mit Dämpfungselementen versehen. Der Betrieb von Fahrzeugen bringt es zudem mit sich, dass die Befestigungen aller Anbauteile eine gewisse Schockresistenz besitzen müssen, um ein Lösen während der Fahrt und beim Auftreten kurzer Störbeschleunigungen sicher zu verhindern. Dazu ist es von Vorteil, Befestigungspunkte nahe den schwersten Baugruppen einer Wischeranlage in das Befestigungskonzept einzubeziehen. All diese Anforderungen müssen vor dem Hintergrund einer moderen Massenfertigung möglichst mit einer leichten Montierbarkeit der Wischeranlage verbunden sein.

Es ist bekannt, Wischeranlagen an mindestens drei Befestigungspunkten abzustützen, die gemeinsam ein Dreieck bilden, wobei ein Befestigungspunkt in unmittelbarer Nähe des Wischermotors angeordnet ist (DE 198 33 404 A1, DE 101 55 269 A1). Als Befestigungsmittel kommen beispielsweise Steckzapfen zum Einsatz, die in entsprechende Öffnungen in der Karosserie eingeführt werden. Die erforderliche Haltewirkung wird teilweise durch kraft- und formschlüssige Wirkungen von Dämpfungselementen an den Befestigungspunkten erzielt, wodurch ein festes definiertes Einschieben der Steckzapfen eine Form der Schnellmontage bildet, die unter Umständen keine weiteren Maßnahmen zur Fixierung der Wischeranlage erfordert. Steckzapfen erfordern jedoch ausreichend Bauraum vor und hinter der Tragstruktur, um vor der Montage möglichst unverkantet vor der für die Befestigung vorgesehenen Öffnung angeordnet und während der Montage ausreichend tief in die Öffnung eingeschoben werden zu können. Des Weiteren stellen Befestigungssysteme mit mehreren Steckzapfen relativ hohe Anforderungen an einzuhaltende Fertigungstoleranzen, insbesondere bei Anordnung der Aufnahmeöffnungen an verschiedenen Bauteilen. Das kann besonders bei der Zusammenführung unterschiedlicher Fertigungstechnologien durch verschiedene Zuliefersysteme mit einem unerwünschten Aufwand, für Nacharbeiten verbunden sein.

Eine gattungsemäße Scheibenwischanlage ist aus der WO-A03/097419 bekannt.

Zahlreiche andere bekannte Befestigungssysteme für Wischeranlagen umfassen teilweise komplexe bzw. vielteilige Befestigungsmittel, deren hoher Montageaufwand einen erheblichen Nachteil darstellt.

### Offenbarung der Erfindung

### Technische Aufgabe

Die Aufgabe der Erfindung besteht darin, ein Wischersystem anzugeben, das sich durch eine einfache Montierbarkeit und hohe Betriebssicherheit auszeichnet, die Nutzung von Befestigungspunkten ermöglicht, an denen wenig Bauraum zur Verfügung steht und das relativ geringe Anforderungen an die Einhaltung von Fertigungstoleranzen stellt.

### Technische Lösung

Gelöst wird diese Aufgabe durch ein Wischersystem mit den Merkmalen von Anspruch 1. Vorteilhafte Ausgestaltungen eines erfindungsgemäßen Wischersystems sind in den Unteransprüchen 2 bis 10 angegeben.

Die Erfindung besteht in einer Scheibenwischeranlage für Fahrzeuge, umfassend mindestens einen Wischermotors und mindestens drei Befestigungsmittel, die an in einem Dreieck angeordneten Befestigungspunkten fixiert werden, wobei mindestens ein Befestigungsmittel eine bügelförmige Öse umfasst, die in eine laschenförmige Aufnahme an einer Tragstruktur, vorzugsweise der Karosserie, eingeschoben oder eingehängt wird.

### Vorteilhafte Wirkungen

Vorteilhafterweise sind als weitere Befestigungsmittel korrespondierende Befestigungsmittelpaare umfasst, die in einer von der Einsetzrichtung der bügelförmigen Öse in die laschenförmige Aufnahme abweichenden Richtung miteinander in Eingriff gebracht und aneinander fixiert werden. Das können beispielsweise Steckzapfen sein, die in einer von der Einsetzrichtung der bügelförmigen Öse in die laschenförmige Aufnahme abweichenden Richtung in korrespondierende Öffnungen eingeführt und darin fixiert werden.

Zur Erzielung der Haltewirkung an den nicht ösenförmigen Befestigungsmitteln können vorteilhafterweise kraft- und formschlüssig wirkende Dämpfungselemente an den jeweiligen Befestigungspunkten vorgesehen sein.

Durch die Verwendung herkömmlicher Befestigungsmittel bleiben deren gute Wirksamkeit und Zuverlässigkeit in einer erfindungsgemäßen Scheibenwischeranlage nutzbar. Die erfindungsgemäße Kombination mit mindestens einem Paar aus einer bügelförmigen Öse und einer laschenförmigen Aufnahme vereinfacht jedoch die Montage der Scheibenwischeranlage insbesondere bei Nutzung von Befestigungspunkten mit konstruktiv bedingt wenig Bauraum erheblich.

Es ist von Vorteil, wenn mindestens eine bügelförmige Öse fest mit dem Getriebegehäuse oder Getriebedeckel des Wischermotors verbunden ist. Auf diese Weise ergibt sich ein Befestigungspunkt, der sich nahe an der schwersten Baugruppe der Scheibenwischeranlage befindet, wodurch deren Aufschwingen wirksam verhindert wird. Des Weiteren lassen sich mit derartigen Lösungen enge Befestigungsorte erschließen, deren Bauraum nur für die Aufnahme der Baugruppe aus Wischermotor und Getriebe ausreichen muss, da die Notwendigkeit montagebedingter Hub- oder Schwenkbewegungen gegebenenfalls entfällt oder die Auslenkung derartiger Bewegungen gegenüber dem Stand der Technik zumindest deutlich reduziert wird.

Je nach Bauart und Gehäuseform, insbesondere bei getriebelosen Wischersystemen, beispielweise bei Wischerdirektantrieben, kann es aus den vorgenannten Gründen vorteilhaft sein, wenn mindestens eine bügelförmige Öse an der Außenseite des Wischermotors angeordnet ist.

Ein weiterer Vorteil ergibt sich, wenn die laschenförmige Aufnahme an der Tragstruktur eine aus der Karosserieebene herausragende Blechlasche ist. Diese Ausführung lässt sich mit geringem technologischen Aufwand durch einfaches Punktschweißen bewerkstelligen, wenn eine geschlossene Lasche und Karosseriefläche gewünscht wird. Alternativ kann eine aus der Karosserieebene herausragende Blechlasche durch einen einfachen Stanz- und Biegeschritt am Karosserieblech erzeugt werden, was Fertigungskosten reduzieren hilft.

### Kurze Beschreibung der Zeichnungen

Weitere Vorteile, Merkmale und Einzelheiten der Erfindung ergeben sich aus der nachfolgenden Beschreibung, in der bevorzugte Ausführungsbeispiele der Erfindung im Einzelnen anhand der Zeichnungen beschrieben werden. Es zeigen:
- Fig. 1: eine schematische Darstellung eines Teiles einer erfindungsgemäßen Scheibenwischeranlage mit Wischergestänge;
- Fig. 2: eine schematische Darstellung eines Teiles einer erfindungsgemäßen Scheibenwischeranlage mit Wischerdirektantrieb;
- Fig. 3: eine schematische Schnittdarstellung einer erfindungsgemäß in eine laschenförmige Aufnahme eingehängten bügelförmigen Öse;
- Fig. 4: eine schematische Schnittdarstellung einer erfindungsgemäß in eine laschenförmige Aufnahme eingeschobenen bügelförmigen Öse.

### Ausführunasformen der Erfindung

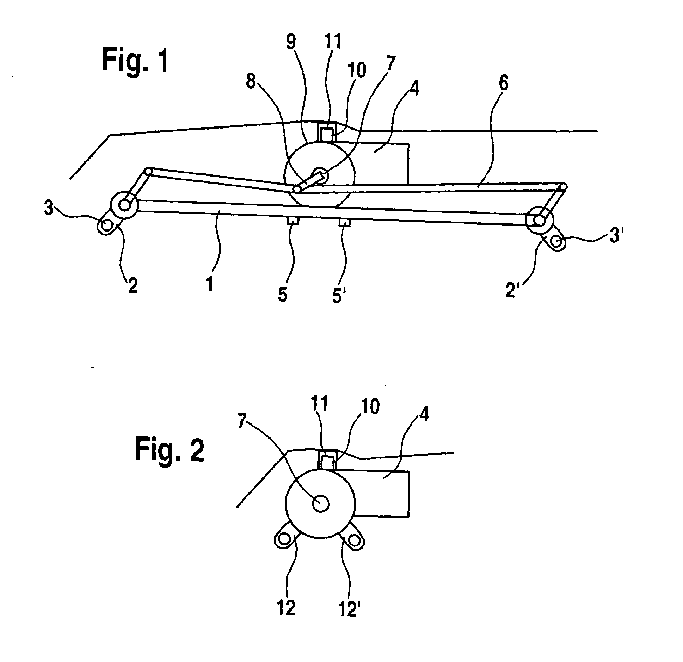

Figur 1 zeigt eine schematische Darstellung eines Teiles einer erfindungsgemäßen Scheibenwischeranlage mit Wischergestänge. Dieses umfasst einen Träger 1, der an seinen Enden mit Formteilen 2, 2' für eine Anbindung an die Karosserie eines Fahrzeuges verbunden ist. Die Formteile 2, 2' verfügen zu diesem Zweck über herkömmliche Befestigungsmittel. Diese umfassen vorliegend Steckzapfen 3, 3', die in entsprechende Öffnungen in der Karosserie eingreifen und dort durch kraft- und formschlüssig wirkende Dämpfungselemente gehalten werden. Eine aus Wischermotor und Getriebe bestehende Baugruppe 4 ist über weitere Befestigungsmittel 5, 5' mit dem Träger 1 verbunden. Die Bezeichnung der aus Wischermotor und Getriebe bestehenden Baugruppe 4 gilt im Folgenden im Sinne der Erfindung auch für getriebelose Wischermotoren oder Anordnungen mit nicht klar separierbaren Getriebe- und Motorkomponenten, wenn sie in Wischeranlagen Verwendung finden. Der Träger 1 mit den Formteilen 2, 2' sowie die aus Wischermotor und Getriebe bestehende Baugruppe 4 bilden dadurch statisch eine Einheit, wodurch Befestigungspunkte in Motornähe und trägernahe Befestigungspunkte gleichermaßen zur stabilen Befestigung der Gesamtanordnung beitragen können. Am Träger 1 stützt sich des Weiteren das Wischergestänge 6 ab, welches über eine von einer Abtriebswelle 7 angetriebenen Kurbel 8 betätigt wird. Direkt am Gehäuse 9 des Getriebes befindet sich eine bügelförmige Öse 10, die für eine Befestigung in einer laschenförmigen Aufnahme vorgesehen ist. Auf diese Weise stehen weit voneinander entfernt Befestigungspunkte zur Verfügung, um auftretende Kräfte und Momente sicher aufnehmen zu können.

Die bügelförmigen Öse 10 ist mit rechteckiger Öffnung ausgeführt, wodurch sie an ihrer Oberseite einen geraden Quersteg 11 umfasst. Durch die Länge dieses Quersteges 11 lässt sich bei einer bestimmten Breite der laschenförmigen Aufnahme ein verbleibendes Querspiel vorgeben, welches die Montierbarkeit der Scheibenwischeranlage, also das Verbinden der restlichen Befestigungsmittel, wenn sich der Steg 11 der bügelförmigen Öse 10 bereits in der laschenförmigen Aufnahme befindet, deutlich erleichtert. Sind alle Befestigungsmittel fixiert, wird dieses seitliche Spiel nicht mehr aktiv benötigt. Es bewirkt jedoch eine gegenüber herkömmlichen Wischersystemen größere Toleranz gegenüber Fertigungstoleranzen, weil nur die an den Formteilen des Trägers 1 befindlichen Befestigungsmittel genau korrespondierende Positionen karosserieseitiger Befestigungsmittel erfordern. Diese befinden sich jedoch meistens in nahezu einer Ebene auf einem Bauteil, weshalb eine Bereitstellung mit geringen Fertigungstoleranzen ohne großen Aufwand möglich ist.

Figur 2 zeigt eine schematische Darstellung eines Teiles einer erfindungsgemäßen Scheibenwischeranlage mit Wischerdirektantrieb. Das dargestellte System verfügt nicht über einen gesonderten Träger, sondern weist direkt an der aus Wischermotor und Getriebe bestehenden Baugruppe 4 befestigte Formteile 12, 12' auf, die zur Befestigung an einer Fahrzeugkarosserie über herkömmliche Befestigungsmittel verfügen. Trotz der verringerten Basislänge zwischen den einzelnen Befestigungspunkten lässt sich durch eine sternförmige Anordnung der beiden Formteile 12, 12' und einer erfindungsgemäßen bügelförmigen Öse 10, die für eine Befestigung in einer laschenförniigen Aufnahme vorgesehen ist, eine ausreichende Beständigkeit der Befestigung der Scheibenwischeranlage erreichen. Die bügelförmige Öse 10 ist wiederum rechteckig ausgeführt, wodurch sich in gleicher Weise die oben beschriebenen Vorteile eines kontrollierten seitlichen Spiels nutzen lassen und eine größere Unempfindlichkeit gegenüber Fertigungstoleranzen erreicht wird.

Je nach technologischen Voraussetzungen kann die erfindungsgemäße bügelförmige Öse 10 einstückig aus dem Material des Getriebedeckels oder -gehäuses genormt oder als Ansetzteil damit verbunden werden. Die Ausführung als Ansetzteil ermöglicht eine flexiblere Ausgestaltung, da auch Stellen, die aus technologischen Gründen für eine einstückige Formung aus einem Grundkörper nicht in Betracht kommen, zum Ansetzen der bügelförmigen Öse 10 genutzt werden können. Das gilt insbesondere für Positionen direkt am Gehäuse des Wischermotors.

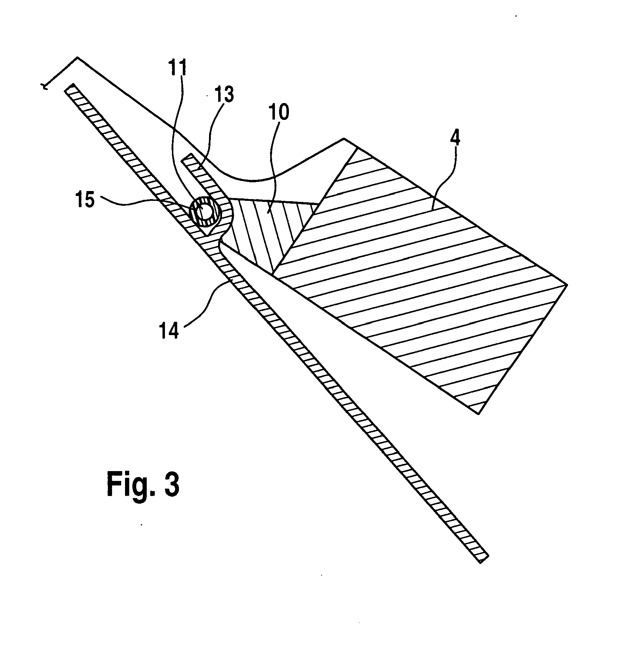

Figur 3 zeigt eine schematische Schnittdarstellung einer erfindungsgemäß in eine laschenförmige Aufnahme 13 eingehängten bügelförmigen Öse 10. Die Darstellung umfasst schematisch die aus Wischermotor und Getriebe bestehende Baugruppe 4, an der sich eine rechteckige bügelförmige Öse 10 befindet, deren oberer gerader Quersteg 11 einen runden Querschnitt aufweist. Der runde Querschnitt hat den Vorteil, dass evtl. vorzunehmende Kippbewegungen während des Einhängens bzw. während des Ausrichtens der Scheibenwischeranlage nicht durch die Geometrie des Quersteges behindert werden.

Eine aus der Karosserieebene herausragende Blechlasche 13 dient erfindungsgemäß als Aufnahme, in welche der Quersteg 11 der bügelförmigen Öse 10 eingehängt wird. Die Blechlasche 13 besteht aus Karosserieblech und ist in einem Stanz- und Biegeschritt aus der Ebene der Karosserie 14 herausgearbeitet worden.

Die Blechlasche 13 wirkt zumindest während der Montage der Scheibenwischeranlage lastaufnehmend. Gleichzeitig bietet ein derartige Aufbau zusätzlich zum bereits beschriebenen seitlichen Spiel die Möglichkeit, den Quersteg 11 der Öse 10 parallel zur Karosserie 14 auch in Einhängrichtung zu verschieben und eine entsprechende Position durch Fixierung der restlichen Befestigungsmittel festzulegen. Die restlichen Befestigwigsmittel übernehmen in diesem Fall weitgehend die Funktion lastaufnehmender Stützen, während die Blechlasche 13 die Anordnung lediglich gegen ein Abkippen sichert.

Zwischen dem Quersteg 11 der bügelförmigen Öse 10 und der laschenförmigen Aufnahmen 13 ist ein elastisches Dämpfungselement 15 angeordnet. Dieses Dämpfungselement 15 unterdrückt die Einkopplung von Betriebsgeräuschen in das Innere des Fahrzeuges. Gleichzeitig wirkt es bei entsprechend straffer Auslegung während der Montage der Scheibenwischeranlage als Fixierhilfe, da es ein zu leichtes Verrutschen der Anordnung vor der Fixierung der restlichen Befestigungsmittel verhindert.

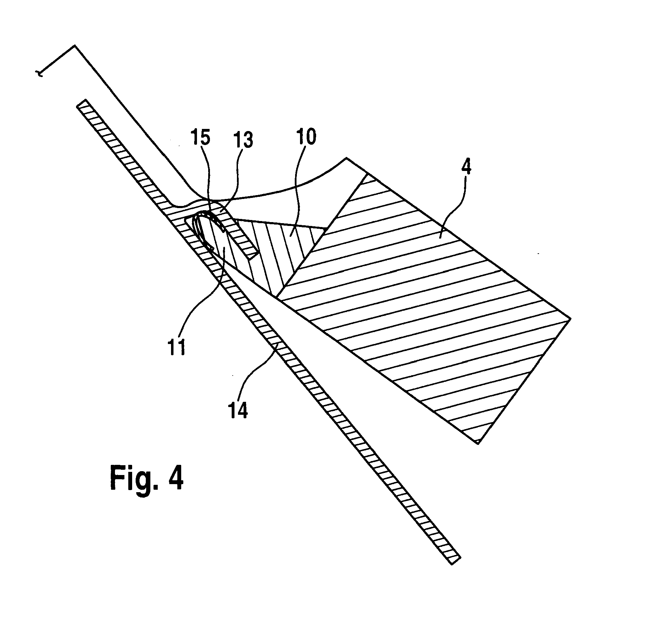

Figur 4 zeigt eine schematische Schnittdarstellung einer erfindungsgemäß in eine laschenförmige Aufnahme eingeschobenen bügelförmigen Öse. In dieser Ausgestaltung weist die Öffnung der aus der Karosserieebene herausragenden Blechlasche 13, die vorliegend als erfindungsgemäße Aufnahme dient, in Richtung der aus Wischermotor und Getriebe bestehende Baugruppe 4. Dadurch kann das Einschieben ohne jede Hubbewegung erfolgen, weshalb diese Variante besonders für Befestigungspunkte an engen Einbauorten, die nur schwer zugänglich sind, geeignet und zu bevorzugen ist.

Auf die lastaufnehmende Funktion der laschenförmigen Aufnahme 13 in Analogie zur Variante der Befestigung der bügelförmigen Öse durch Einhängen wird von vornherein verzichtet. Nach Fixierung der restlichen Befestigungsmittel wird ein Herausrutschen der bügelförmigen Öse 10 jedoch ebenfalls verhindert. Die Funktion der laschenförmigen Aufnahme 13 beschränkt sich im fertig montierten Zustand der Scheibenwischeranlage wiederum auf die Sicherung gegen ein Abkippen der gesamten Anordnung. Auch in dieser Ausführungsform bietet sich durch die Möglichkeit des Verschiebens des Quersteges 11 der bügelförmigen Öse 10 ein Freiheitsgrad während der Montage der Scheibenwischeranlage, der die Abhängigkeit von Fertigungstoleranzen erheblich reduziert.

Da zum Einschieben der bügelförmigen Öse 10 in die laschenförmige Aufnahme 13 zumindest am Ort der Verbindung keinerlei Hubbewegung auszuführen ist, können besonders flache Einbauorte für die Platzierung einer derartigen erfindungsgemäßen Befestigung erschlossen werden. Es muss lediglich genügend Platz für die Ausbildung der laschenförniigen Aufnahme 13 zur Verfügung stehen. Im vorliegenden Ausführungsbeispiel weist der obere gerade Quersteg 11 der bügelförmigen Öse 10 einen flachen Querschnitt in Form einer Ellipse auf. Mit derartigen Querschnitten lässt sich der für die Ausbildung der laschenförmigen Aufnahme 13 erforderlich Bauraum noch weiter reduzieren, ohne Abstriche an der Festigkeit der bügelförmigen Öse 10 in Kauf nehmen zu müssen.

Zwischen dem Quersteg 11 der bügelförmigen Öse 10 und der laschenförmigen Aufnahme 13 ist wiederum ein elastisches Dämpfungselement 15 angeordnet. Der flache Querschnitt des Quersteges 11 der bügelförmigen Öse 10 bietet bei einer entsprechenden Ausrichtung der Haupterstreckungsrichtung in der Querschnittsebene einen weiteren konstruktiven Vorteil. Dieser ist insbesondere dann nutzbar, wenn konstruktive Randbedingungen in der Einbauumgebung der Scheibenwischeranlage ein Einsetzen der Anlage in einer bestimmten Ausrichtung erfordern. Der Querschnitt des oberen Quersteges 11 ist in diesem Falle so festzulegen, dass er während des Einschiebens der bügelförmigen Öse 10 in die laschenförmige Aufnahme 13 seine minimale Ausdehnung senkrecht zur Einschubrichtung aufweist. Dadurch wird das Einschieben zunächst erleichtert. Erfolgt dann zur Fixierung der restlichen Befestigungsmittel ein Verschwenken der gesamten Anordnung in die endgültige Position, kommt es durch die damit verbundene Drehung des oberen Quersteges 11 zu einer Verspreizung des Quersteges 11 mit länglichem Querschnitt, wodurch das Dämpfungselement 15 vorgespannt und die bügelförmige Öse 10 wiederum zumindest behelfsmäßig fixiert und gegen ein Verrutschen gesichert wird.

Entsprechend der Erfindung ist es auch möglich, mehrere bügelförmige Ösen vorzusehen, die in entsprechenden laschenförmigen Aufnahmen befestigt werden. Dadurch lässt sich die Zahl der Abstützpunkte zur Erzielung einer ausreichenden Zuverlässigkeit der Montierung nahezu beliebig erweitern, wenn die einzelnen Einschub- oder Einhängrichtungen miteinander harmonieren. Durch das zur Verfügung stehende Spiel der erfindungsgemäßen Befestigung ist eine Montage einer Scheibenwischeranlage auch bei einer größeren Zahl von Befestigungspunkten mit einen relativ geringen Justier- und Positionieraufwand möglich, wenn sich nicht gleichzeitig die Zahl der exakt zu positionierenden Befestigungsmittel erhöht. Insbesondere schwere Baugruppen können so durch mehrere eng benachbarte bügelförmige Ösen, die in laschenförmigen Aufnahmen befestigt werden, sicher befestigt werden, ohne dass Überlastungen im Karosseriebereich zu befürchten wären.

## Patentansprüche

1. Scheibenwischeranlage für Fahrzeuge, umfassend mindestens eine aus Wischermotor und Getriebe bestehende Baugruppe (4) und mindestens drei Befestigungsmittel (5, 5', 10), die an in einem Dreieck angeordneten Befestigungspunkten fixiert werden, wobei mindestens ein Befestigungsmittel eine bügelförmige Öse (10) umfasst, die in eine laschenförmige Aufnahme (13) an einer Tragstruktur eingeschoben oder eingehängt wird.

2. Scheibenwischeranlage nach Anspruch 1, **dadurch gekennzeichnet, dass** mindestens eine bügelförmige Öse (10) fest mit einem Getriebegehäuse oder Getriebedeckel der aus Wischermotor und Getriebe bestehende Baugruppe (4)verbunden ist.

3. Scheibenwischeranlage nach Anspruch 1, **dadurch gekennzeichnet, dass** mindestens eine bügelförmige Öse (10) an der Außenseite des Wischermotors angeordnet ist.

4. Scheibenwischeranlage nach einem der Ansprüche 1 bis 3, **dadurch gekennzeichnet, dass** die bügelförmige Öse (10) einen geraden Quersteg (11) mit rundem Querschnitt umfasst.

5. Scheibenwischeranlage nach einem der Ansprüche 1 bis 3, **dadurch gekennzeichnet, dass** die bügelförmige Öse (10) einen geraden Quersteg (11) mit einem sich bevorzugt in einer Richtung erstreckenden Querschnitt umfasst.

6. Scheibenwischeranlage nach einem der Ansprüche 1 bis 5, **dadurch gekennzeichnet, dass** zwischen der bügelförmigen Öse (10) und der laschenförmigen Aufnahme (13) ein Dämpfungselement (15) angeordnet ist.

7. Scheibenwischeranlage nach einem der Ansprüche 1 bis 6, **dadurch gekennzeichnet, dass** als weitere Befestigungsmittel korrespondierende Befestigungsmittelpaare umfasst sind, die in einer von der Einsetzrichtung der bügelförmigen Öse (10) in die laschenförmige Aufnahme (13) abweichenden Richtung miteinander in Eingriff gebracht und aneinander fixiert werden.

8. Scheibenwischeranlage nach einem der Ansprüche 1 bis 7, **dadurch gekennzeichnet, dass** als weitere Befestigungsmittel Steckzapfen (5, 5') umfasst sind, die in einer von der Einsetzrichtung der bügelförmigen Öse (10) in die laschenförmige Aufnahme (13) abweichenden Richtung in korrespondierende Öffnungen eingeführt und darin fixiert werden.

9. Scheibenwischeranlage nach einem der Ansprüche 1 bis 8, **dadurch gekennzeichnet, dass** zur Erzielung der Haltewirkung an nicht ösenförmigen Befestigungsmitteln kraft- und formschlüssig wirkende Dämpfungselemente an den jeweiligen Befestigungspunkten vorgesehen sind.

10. Scheibenwischeranlage nach einem der Ansprüche 1 bis 9, **dadurch gekennzeichnet, dass** die laschenförmige Aufnahme (13) an der Tragstruktur eine aus der Karosserieebene (14) herausragende Blechlasche ist.

## Claims

1. Windscreen wiper system for vehicles, comprising at least one subassembly (4) consisting of a wiper motor and gearing, and at least three fastening means (5, 5', 10) which are fixed at fastening points arranged in a triangle, wherein at least one fastening means comprises a U-shaped eye (10) which is pushed or fitted into a tab-shaped receptacle (13) on a supporting structure.

2. Windscreen wiper system according to Claim 1, **characterized in that** at least one U-shaped eye (10) is connected fixedly to a gearing housing or gearing cover of the subassembly (4) consisting of a wiper motor and gearing.

3. Windscreen wiper system according to Claim 1, **characterized in that** at least one U-shaped eye (10) is arranged on the outer side of the wiper motor.

4. Windscreen wiper system according to one of Claims 1 to 3, **characterized in that** the U-shaped eye (10) comprises a straight transverse web (11) with a round cross section.

5. Windscreen wiper system according to one of Claims 1 to 3, **characterized in that** the U-shaped eye (10) comprises a straight transverse web (11) with a cross section which preferably extends in one direction.

6. Windscreen wiper system according to one of Claims 1 to 5, **characterized in that** a damping element (15) is arranged between the U-shaped eye (10) and the tab-shaped receptacle (13).

7. Windscreen wiper system according to one of Claims 1 to 6, **characterized in that** corresponding pairs of fastening means are included as further fastening means, said pairs of fastening means being brought into engagement with each other in a direction deviating from the direction of insertion of the U-shaped eye (10) into the tab-shaped receptacle (13) and being fixed to each other.

8. Windscreen wiper system according to one of Claims 1 to 7, **characterized in that** plug-in pins (5, 5') are included as further fastening means, said plug-in pins being introduced into corresponding openings in a direction deviating from the direction of insertion of the U-shaped eye (10) into the tab-shaped receptacle (13) and being fixed therein.

9. Windscreen wiper system according to one of Claims 1 to 8, **characterized in that** damping elements acting in a frictional and interlocking manner are provided at the respective fastening points to obtain the retaining action at fastening means which are not eye-shaped.

10. Windscreen wiper system according to one of Claims 1 to 9, **characterized in that** the tab-shaped receptacle (13) on the supporting structure is a sheet-metal tab protruding out of the bodywork plane (14).

## Revendications

1. Installation d'essuie-glace pour véhicules, comprenant au moins un module (4) constitué d'un moteur d'essuie-glace et d'une transmission, et au moins trois moyens de fixation (5, 5', 10) qui sont fixés dans des points de fixation disposés en triangle, au moins un moyen de fixation comprenant un oeillet en forme d'étrier (10), qui est enfoncé ou accroché dans un logement en forme de langue (13) sur une structure de support.

2. Installation d'essuie-glace selon la revendication 1, **caractérisée en ce qu'**au moins un oeillet en forme d'étrier (10) est connecté fixement à un boîtier de transmission ou à un couvercle de transmission du module (4) constitué du moteur d'essuie-glace et de la transmission.

3. Installation d'essuie-glace selon la revendication 1, **caractérisée en ce qu'**au moins un oeillet en forme d'étrier (10) est disposé sur le côté extérieur du moteur d'essuie-glace.

4. Installation d'essuie-glace selon l'une quelconque des revendications 1 à 3, **caractérisée en ce que** sillet en forme d'étrier (10) comprend une nervure transversale droite (11) avec une section transversale arrondie.

5. Installation d'essuie-glace selon l'une quelconque des revendications 1 à 3, **caractérisée en ce que** l'oeillet en forme d'étrier (10) comprend une nervure transversale droite (11) avec une section transversale s'étendant de préférence dans une direction.

6. Installation d'essuie-glace selon l'une quelconque des revendications 1 à 5, **caractérisée en ce que** l'on dispose un élément d'amortissement (15) entre l'oeillet en forme d'étrier (10) et le logement en forme de langue (13).

7. Installation d'essuie-glace selon l'une quelconque des revendications 1 à 6, **caractérisée en ce que** des moyens de fixation supplémentaires sont constitués par des paires de moyens de fixation correspondantes, qui sont amenées en prise les unes avec les autres et qui sont fixées les unes aux autres dans une direction s'écartant de la direction d'insertion de l'oeillet en forme d'étrier (10) dans le logement en forme de langue (13).

8. Installation d'essuie-glace selon l'une quelconque des revendications 1 à 7, **caractérisée en ce que** des moyens de fixation supplémentaires sont constitués par des tourillons enfichables (5, 5') qui sont insérés et fixés dans des ouvertures correspondantes dans une direction s'écartant de la direction d'insertion de l'oeillet en forme d'étrier (10) dans le logement en forme de langue (13).

9. Installation d'essuie-glace selon l'une quelconque des revendications 1 à 8, **caractérisée en ce que** pour obtenir l'effet de retenue, on prévoit sur des moyens de fixation qui ne sont pas en forme d'oeillet des éléments d'amortissement agissant par engagement par force et par correspondance géométrique, sur les points de fixation respectifs.

10. Installation d'essuie-glace selon l'une quelconque des revendications 1 à 9, **caractérisée en ce que** le logement en forme de langue (13) sur la structure de support est une langue de tôle saillant hors du plan de la carrosserie (14).
